# EUROPEAN PATENT APPLICATION

(11) **EP 4 462 609 A1**
(43) Date of publication of application: **13.11.2024**
(21) Application number: 23737348.5
(22) Date of filing: 03.01.2023
(51) Int. Cl.: H01R 13/58, H01R 13/621

(54) **TERMINAL STRUCTURE**

(30) Priority: 06.01.2022 KR 20220002034
(71) Applicant: LS Electric Co., Ltd., Gyeonggi-do 14119 (KR)
(72) Inventor: KIM, Jaeseop, Anyang-si Gyeonggi-do 14118 (KR)
(74) Representative: K&L Gates LLP
(86) International application number: PCT/KR2023/000075
(87) International publication number: WO 2023/132600

(57) **Abstract**

A terminal structure is disclosed. The terminal structure according to one aspect of the present invention comprises: a body unit which is coupled to an external device, and which is electrically connected to the external device and each of a plurality of conducting wire members, respectively; an current-carrying member which is coupled to the body unit, and which is electrically connected to the body unit and each of the plurality of conducting wire members, respectively; and a conducting wire member coupling unit which is coupled to the current-carrying member, and which supports the plurality of conducting wire members. The conducting wire member coupling unit comprises: a space for accommodating the plurality of conducting wire members; and a plurality of support wings surrounding the space, wherein the plurality of support wings are made of a ductile material so as to be modifiable in shape by means of external force, thereby surrounding the plurality of conducting wire members accommodated in the space.

## Description

### Technical Field

The present disclosure relates to a terminal structure, and more particularly, to a terminal structure having a structure such that a state of electrical connection with a plurality of conducting wire members is easily and concisely established.

### Background Art

A battery disconnect unit (BDU) is one of power control components of eco-friendly vehicles, and refers to a component configured to connect or disconnect power between a battery and a load. Particularly, a BDU is equipped in an electric vehicle and configured to apply or block power between a battery and a load.

The BDU is coupled to a terminal configured to carry current to a sensor for detecting a state such as a temperature and a voltage, and a preliminary charging circuit, etc. The terminal electrically connects various components constituting the BDU such as a direct current (DC) relay, a fuse, and a busbar, and a sensor to each other.

However, in a case of a BDU in the related art, conducting wires configured to electrically connect a DC relay to a sensor, a preliminary charging circuit, etc. are each coupled to the DC relay.

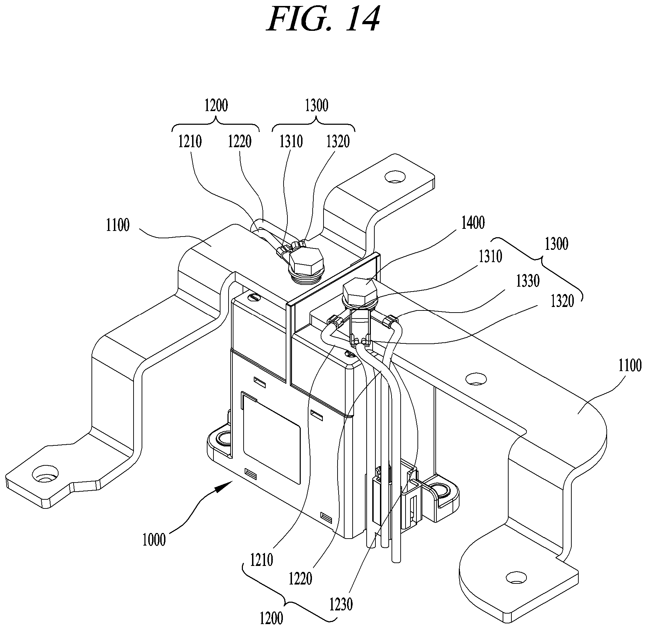

That is, as illustrated in FIG. 14, a plurality of conducting wire members 1200 and support members 1300 configured to support the plurality of conducting wire members 1200 are respectively coupled to a DC relay 1000 in the related art. As described above, at least three conducting wire members 1200 and support members 1300 need to be disposed to carry current to both a sensor configured to detect a temperature and a voltage and a preliminary charging circuit.

That is, in the DC relay 1000 in the related art shown in FIG. 14, a first conducting wire member 1210, a second conducting wire member 1220, and a third conducting wire member 1230 are each electrically connected. The conducting wire members 1210, 1220, and 1230 are supported by a first support member 1310, a second support member 1320, and a third support member 1330, respectively.

In addition, each of the support members 1310, 1320, and 1330 is coupled to the DC relay 1000 by a plurality of fastening members 1400.

Accordingly, in the DC relay 1000 in the related art, since three conducting wires are independently connected to each fixed contactor, a wiring structure is complicated. In addition, since many components need to be included, there is a problem in that manufacturing cost and time increase.

Korean Registration Utility Model Publication No. 20-0467487 discloses a relay mounting structure. In detail, a relay mounting structure which allows easily coupling of a printed circuit board to a relay by designing a terminal coupling portion to have an arc shape with a certain curvature is disclosed.

However, the related art described above only discloses a structure for coupling a relay to a printed circuit board. That is, this related art does not disclose a method of simply and concisely constituting a wiring structure such as a conducting wire, etc. coupled to a relay for various purposes.

Korean Patent Registration No. 10-1313744 discloses a battery disconnection unit and a method of assembling the same. In detail, a battery disconnection unit having a structure in which a plurality of busbars are disposed on a circuit board, and each of the busbars are connected to a plurality of contact devices, an external battery pack, and a load, and a method of assembling the battery disconnection unit are disclosed.

However, the battery disconnection unit and the method of assembling the same, as disclosed in the aforementioned related art, presupposes that the busbars are coupled to a circuit board. That is, it is difficult to adopt the disclosure in this related art when a busbar and a DC relay disposed outside are electrically connected by a conducting wire member, etc.

### Disclosure of Invention

### Technical Problem

Therefore, to obviate those problems, an aspect of the detailed description is to provide a terminal structure having a structure such that a state of electrical connection with a plurality of conducting wire members may be simply and concisely implemented.

The present disclosure further describes a terminal structure having a structure such that a state of electrically connection and coupling with a plurality of conducting wire members may be stably maintained.

The present disclosure further describes a terminal structure having a structure such that design freedom may be enhanced according to an external environment that needs electrical connection.

The present disclosure further describes a terminal structure having a structure capable of being directly coupled to an external device.

The present disclosure further describes a terminal structure having a structure such that a state of electrical connection and coupling with an external device may be stably maintained.

The present disclosure may be embodied in many different forms and should not be construed as being limited to the embodiments set forth herein. Additional aspects will be set forth in part in the description which follows and, in part, will be apparent from the description, or may be learned by practice of the presented embodiments.

### Solution to Problem

To achieve these and other advantages and in accordance with the purpose of the present disclosure, as embodied and broadly described herein, there is provided a terminal structure including: a body unit coupled to an external device, and electrically connected to the external device and a plurality of conducting wire members, respectively; a current-carrying member coupled to the body unit, and electrically connected to the body unit and the plurality of conducting wire members, respectively; and a conducting wire member coupling unit which is coupled to the current-carrying member, and supports the plurality of conducting wire members, wherein the conducting wire member coupling unit includes a space for accommodating the plurality of conducting wire members, and a plurality of support wings surrounding the space, and the plurality of support wings are made of a ductile material and configured to be modified in shape by an external force to surround the plurality of conducting wire members accommodated in the space.

The conducting wire member coupling unit may include: a first coupling unit including the plurality of support wings and a first accommodating space defined by being surrounded by the plurality of support wings, and coupled to one portion of the plurality of conducting wire members in an extension direction; and a second coupling unit located adjacent to the first coupling unit, including a plurality of support arms and a second accommodating space defined by being surrounded by the plurality of support arms, and coupled to another portion of the plurality of conducting wire members in the extension direction.

In addition, the plurality of support arms may be made of a ductile material and configured to be modified in shape by an external force to surround the another portion of the plurality of conducting wire members accommodated in the second accommodating space.

The first accommodating space and the second accommodating space may be in communication with each other, and the plurality of conducting wire members may be respectively accommodated in the first accommodating space and the second accommodating space and extended.

In addition, the body unit may include: an extension portion extending between the current-carrying member and the external device; a head portion coupled to the external device and continuous with the extension portion; and a coupling opening which is disposed through an inner side of the head portion and through which a fastening member coupled to the external device passes.

The external device may be a direct current (DC) relay.

In addition, the extension portion and the head portion may be configured to have a plate shape with a certain thickness.

The extension portion may include: a first extension portion of which one end portion in an extension direction is continuous with the head portion, and which extends on a same plane as that of the head portion; and a second extension portion that is continuous with another end of the first extension portion and extends at a certain angle relative to the first extension portion.

In addition, the extension portion may be configured such that one end portion in an extension direction is continuous with the head portion and another end portion in the extension direction is continuous with the current-carrying member, and the extension portion may be disposed to extend on a same plane as that of the head portion.

The body unit, the conducting wire member coupling unit, and the current-carrying member may extend in parallel with each other in one direction.

In addition, the body unit may include: a head portion constituting one end portion of the body unit and coupled to the external device; and a coupling opening which is disposed to penetrate through an inner side of the head portion and into which a part of the external device is inserted.

The body unit may include a coupling protruding portion located on an inner surface of the head portion surrounding the coupling opening, disposed to extend toward the coupling opening, and configured to support an outer circumference of the part of the external device.

In addition, the coupling protruding portion may include: a first protruding portion disposed to extend from the inner surface of the head portion toward the coupling protruding portion; and a second protruding portion which is continuous with an end portion of the first protruding portion, disposed to extend at a certain angle relative to the first protruding portion, and configured to be in contact with the outer circumference of the part of the external device.

The part of the external device may be inserted into the coupling opening along one direction, and the second protruding portion may extend to be inclined toward an inner side of the coupling opening along the one direction.

In addition, the coupling protruding portion may be located to be biased to one side of the inner surface of the head portion, the one side of the inner surface directing toward the current-carrying member.

### Advantageous Effects of Invention

In accordance with the configuration described above, a terminal structure according to an embodiment of the present disclosure may be configured such that a state of electrical connection with a plurality of conducting wire members is simply and concisely established.

First, the terminal structure includes a conducting wire member coupling unit. The conducting wire member coupling unit includes an accommodating space for accommodating a plurality of conducting wire members, and a support wing or a support arm surrounding the accommodating space. The plurality of conducting wire members are accommodated in the accommodating space and are not spread in a form of strands.

The conducting wire member coupling unit is coupled to a current-carrying member and a body unit. The plurality of conducting wire members may be electrically connected to the body unit through the current-carrying member. The body unit may be coupled to an external device, e.g., a direct current (DC) relay or a busbar. That is, the plurality of conducting wire members are each electrically connected to the DC relay or the busbar through the terminal structure.

Accordingly, the plurality of conducting wire members may be electrically connected to the DC relay or the busbar in a state of being coupled to and supported by a single terminal structure. Accordingly, compared to a case when the plurality of conducting wire members are each electrically connected to a DC relay or a busbar, a wiring structure may be simply and concisely established.

Additionally, in accordance with the configuration described above, the terminal structure according to an embodiment of the present disclosure may be configured such that a state of electrical connection and coupling with a plurality of conducting wire members may be stably maintained.

The conducting wire member coupling unit may be made of a ductile material. That is, the conducting wire member coupling unit may be deformed in shape by an external force and maintained in the deformed shape. When the plurality of conducting wire members are accommodated in the accommodating space, an external force may be applied to the support wing or the support arm surrounding the accommodating space, and thus, a shape may be deformed to surround the plurality of conducting wire members. Unless another external force is applied, the support wing or the support arm is maintained in a state of surrounding the plurality of conducting wire members.

The conducting wire member coupling unit may include a plurality of coupling portions. The plurality of coupling portions may be arranged in parallel with an extension direction of the plurality of conducting wire members. A portion of the plurality of conducting wire members in the extension direction may be supported by the support wing. In addition, another portion of the plurality of conducting wire members in the extension direction may be supported by the support arm.

That is, the conducting wire member coupling unit may be configured to support a plurality of conducting wire members at a plurality of positions. Accordingly, since the plurality of conducting wire members do not arbitrarily escape from the accommodating space, a state of electrical connection and coupling between the plurality of conducting wire members and the terminal structure may be stably maintained.

Additionally, in accordance with the configuration described above, the terminal structure according to an embodiment of the present disclosure may be configured such that design freedom may be enhanced according to an external environment that needs electrical connection.

In one embodiment, a body unit of the terminal structure may be configured to include a bent portion. That is, in the embodiment described above, the body unit may include a first extension portion extending in one direction and a second extension portion extending in another direction to constitute a certain angle relative to the first extension portion.

In the embodiment described above, the first extension portion, the second extension portion, and a bent portion disposed therebetween may be configured to have a shape corresponding to a shape of an external device to which the terminal structure is coupled, such as a DC relay, a busbar, etc.

In another embodiment, a body unit of a terminal structure may be disposed to extend in one direction. That is, in the embodiment described above, the body unit may extend in a same direction as an extension direction of a plurality of conducting wire members.

In the embodiment described above, since the body unit does not include a bent portion, an extending length of the body unit may be reduced. Accordingly, since a size of the whole terminal structure may be reduced, the terminal structure may be installed even when an installation environment is small.

Therefore, depending on an external device or environment, a structure of the terminal structure may be modified and applied in various forms. Accordingly, design freedom of the terminal structure may be improved.

In addition, according to the configuration described above, the terminal structure according to an embodiment of the present disclosure may be directly coupled to an external device.

In one embodiment, a coupling protruding portion may be disposed on the body unit. The coupling protruding portion is disposed to protrude toward a coupling opening from an inner surface surrounding the coupling opening disposed inside a head portion. In this case, the coupling opening corresponds to a shape of an external member inserted therein, for example, a fixed contact point, and is disposed to have a larger cross-sectional area.

In the embodiment described above, the coupling protruding portion may be made of an elastic material. Thus, the external member may press the coupling protruding portion along an insertion direction to deform a shape to be thereby inserted into the coupling opening.

Accordingly, the terminal structure may be directly coupled and electrically connected to an external device through the coupling opening and the coupling protruding portion.

In addition, according to the configuration described above, the terminal structure according to an embodiment of the present disclosure may be configured such that a state of coupling and electrical connection with an external device may be stably maintained.

In one embodiment, the terminal structure may be coupled to an external device using a separate fastening member such as a screw, etc. The fastening member may penetrate through an external device, such as a busbar, a DC relay, and the terminal structure, respectively, to perform coupling therebetween. Accordingly, a state of coupling and electrical connection between the terminal structure and the external device may be stably maintained.

In another embodiment in which a coupling protruding portion is included, the coupling protruding portion is configured to press an outer circumference of an external member inserted into the coupling opening, e.g., a fixed contact point. Accordingly, the inserted external device may be drawn out of the coupling opening only along a certain angle when a separate external force is applied to the inserted external device.

Accordingly, a state of coupling and electrical connection between the terminal structure and the external device may be stably maintained.

Effects of the present disclosure are not limited to the effects described above, and should be understood to include all effects that may be inferred from configurations described in the detailed description or claims of the present disclosure.

### Brief Description of Drawings

FIG. 1 is a perspective view illustrating a state in which a direct current (DC) relay is electrically connected to a busbar by a terminal structure according to an embodiment of the present disclosure.
FIG. 2 is a perspective view illustrating the state of FIG. 1 viewed from a different angle.
FIG. 3 is an exploded perspective view illustrating a coupling relationship between the terminal structure, the DC relay, and the busbar, each shown in FIG. 1.
FIG. 4 is a perspective view illustrating a state in which a conducting wire member is coupled to the terminal structure of FIG. 1.
FIG. 5 is a perspective view illustrating the terminal structure of FIG. 1.
FIG. 6 is a perspective view of the terminal structure of FIG. 5 viewed from a different angle.
FIG. 7 is a perspective view illustrating a state in which a DC relay is electrically connected to a busbar by a terminal structure according to another embodiment of the present disclosure.
FIG. 8 is a perspective view illustrating a state in which a conducting wire member is coupled to the terminal structure of FIG. 7.
FIG. 9 is a perspective view illustrating the terminal structure of FIG. 7.
FIG. 10 is a perspective view a state in which a DC relay is electrically connected to a busbar by a terminal structure according to still another embodiment of the present disclosure.
FIG. 11 is a perspective view illustrating a state in which a conducting wire member is coupled to the terminal structure of FIG. 10.
FIG. 12 is a perspective view illustrating the terminal structure of FIG. 10.
FIG. 13 is a perspective view of the terminal structure of FIG. 10 viewed from a different angle.
FIG. 14 is a perspective view illustrating a state of conduction between a DC relay and a conducting wire member in the related art.

### Mode for the Invention

Hereinafter, embodiments of the present disclosure will be described in detail with reference to the accompanying drawings so that those skilled in the art can easily implement the present disclosure. The present disclosure may, however, be implemented in many different forms and should not be construed as being limited to the embodiments set forth herein. In the description of the inventive disclosure, certain detailed explanations are omitted when it is deemed that they may unnecessarily obscure the essence of the present disclosure. Like numbers refer to like elements throughout the description of the figures.

Terms or words used in this specification and claims should not be interpreted as being limited to have a general meaning or a meaning defined in a dictionary, but should be interpreted as having a meaning and a concept which are consistent with the technical ideas of the present disclosure, based on a principle such that an inventor may properly define concepts of the terms and concepts to explain the present disclosure of the inventor by using an optimum method.

Therefore, example embodiments will be described in detail with reference to the accompanying drawings. It should be understood, however, that there is no intent to limit example embodiments to the particular forms disclosed, but on the contrary, example embodiments are to cover all modifications, equivalents, and alternatives falling within the scope of the present disclosure.

In the following description, a description of some components may be omitted to clarify features of the present disclosure.

### 1. Definition of Terms

The term "communication" used in the following description means that one or more members are connected to each other to be capable of performing fluid communication. In one embodiment, communication may be implemented by a member such as a conduit, a pipe, piping, or the like.

The term "electrical connection" used herein means that one or more members are connected to each other to transmit current or an electrical signal with each other. In one embodiment, electrical connection may be established in a wired form using a conducting wire member, etc. or in a wireless form such as Bluetooth, wireless-fidelity (Wi-Fi), radio frequency identification (RFID), etc.

The terms "upper side," "lower side," "left side," "right side,", "front side," and "rear side" used herein will be understood based on a coordinate system illustrated throughout the attached drawings.

It is assumed that a terminal structure 10, 20, or 30 according to each embodiment to be described hereinafter is used in coupling with a busbar 50 and a direct current (DC) relay 40. Alternatively, the terminal structure 10, 20, or 30 according to each embodiment may be equipped in any electrical device that needs to be electrically connected to another external member.

### 2. Description of a configuration of the terminal structure 10 according to one embodiment of the present disclosure

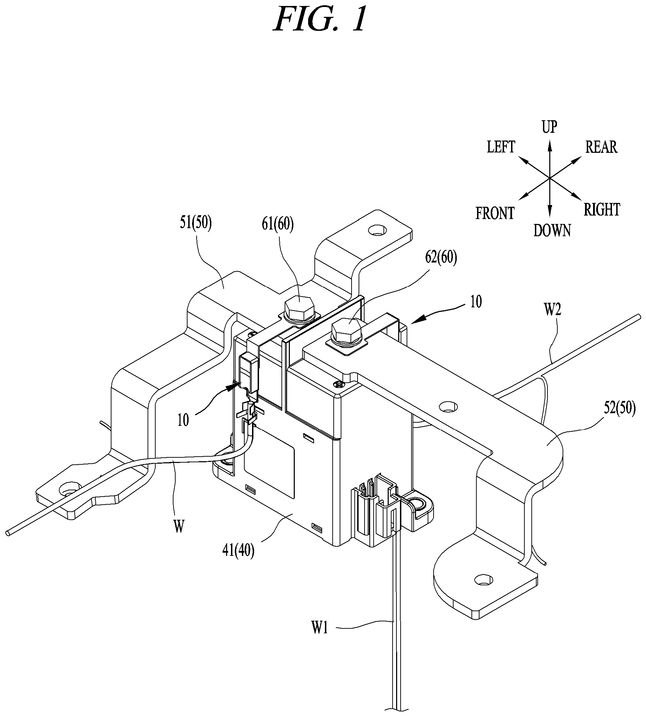

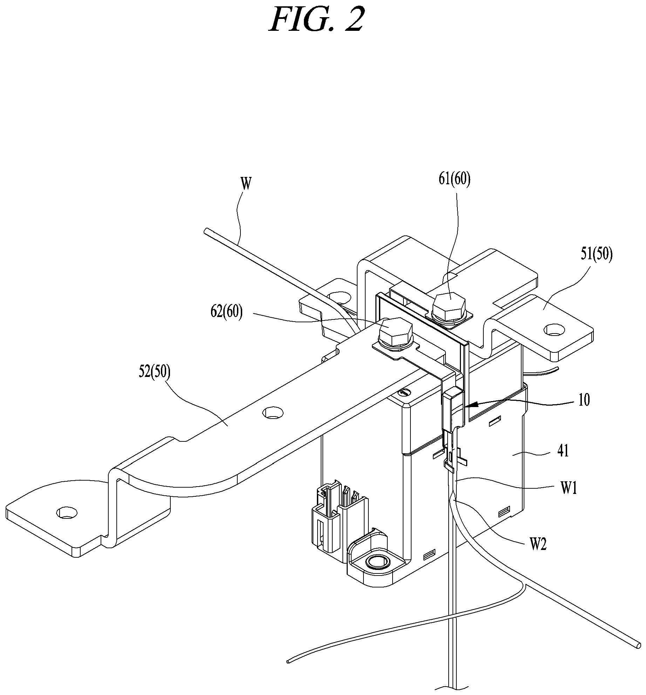

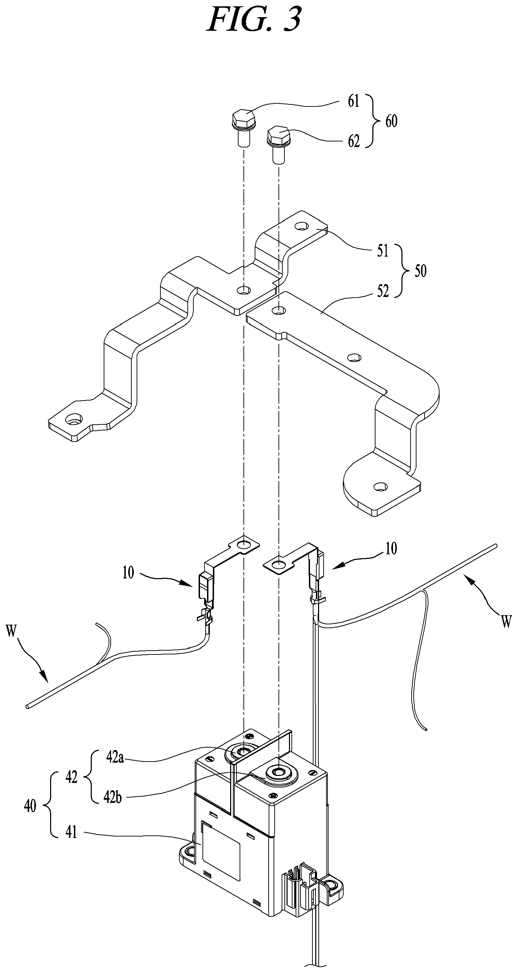

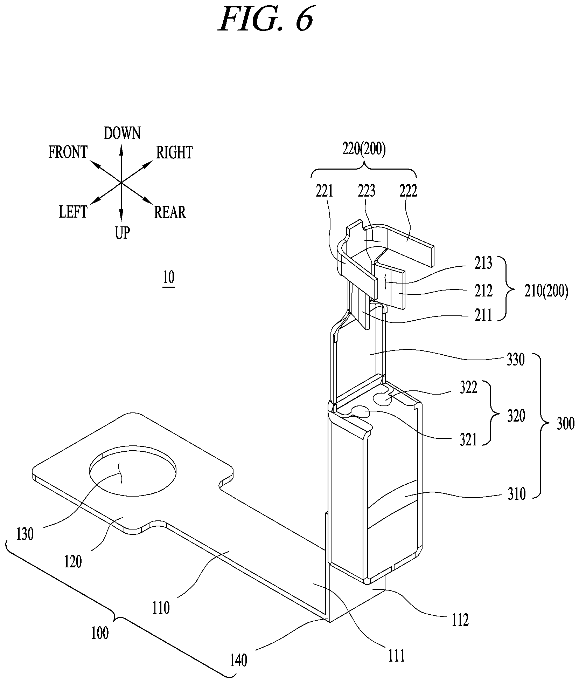

Referring to FIGS. 1 to 6, the terminal structure 10 according to one embodiment of the present disclosure is illustrated. In the illustrated embodiment, the terminal structure 10 is coupled, and thus, electrically connected to the DC relay 40.

In the illustrated embodiment, the DC relay 40 includes an enclosure 41 constituting an external shape, and a fixed contact point 42 exposed to outside of the enclosure 41. In this case, a plurality of fixed contact points 42 are equipped to include a first fixed contact point 42a located on a left side and a second fixed contact point 42b located on a right side.

The busbar 50 is coupled to the plurality of fixed contact points 42. The busbar 50 is electrically connected to the fixed contact point 42, an external device, etc. A plurality of busbars 50 may be equipped to be coupled and electrically connected to the plurality of fixed contact points 42, respectively. In the illustrated embodiment, the busbar 50 includes a first busbar 51 coupled and electrically connected to the first fixed contact point 42a, and a second busbar 52 coupled and electrically connected to the second fixed contact point 42b.

The terminal structure 10 is coupled to the busbar 50 to be electrically connected to the busbar 50 and the fixed contact point 42, respectively. In the illustrated embodiment, the terminal structure 10 is located on the busbar 50 and partially covers the busbar 50 to be coupled to the busbar 50.

Alternatively, the terminal structure 10 may be positioned between the busbar 50 and the fixed contact point 42. In the embodiment, the terminal structure 10 may be directly coupled to the fixed contact point 42.

A fastening member 60 is disposed to maintain a coupling state of the DC relay 40, the busbar 50, and the terminal structure 10. The fastening member 60 sequentially penetrates through the terminal structure 10, the busbar 50, and the fixed contact point 42 to perform coupling therebetween. Accordingly, the DC relay 40, the busbar 50, and the fixed contact point 42 may be coupled to each other to be maintained in an electrically connected state.

Additionally, the terminal structure 10 according to the present embodiment may be coupled to a plurality of conducting wire members W. In this case, the plurality of conducting wire members W may be electrically connected to the DC relay 40 through a single terminal structure 10. That is, the terminal structure 10 is configured to electrically connect the plurality of conducting wire members W and the DC relay 40, simultaneously.

A plurality of conducting wire members W may be connected to the DC relay 40. In the illustrated embodiment, two conducting wire members W including a first conducting wire member W1 and a second conducting wire member W2 are disposed. Alternatively, depending on a number of external members or devices that need to be electrically connected to the DC relay 40, more conducting wire members W may be disposed.

The plurality of conducting wire members W may be electrically connected to different external devices. In one embodiment, a conducting wire member W may be electrically connected to a preliminary charging circuit, a voltage or current sensor, a temperature sensor, etc.

In the illustrated embodiment, the terminal structure 10 includes a body unit 100, a conducting wire member coupling unit 200, and a current-carrying member 300.

The body unit 100 constitutes an outer form of the terminal structure 10. The body unit 100 is a portion in which the terminal structure 10 is coupled to the DC relay 40 or the busbar 50.

The body unit 100 may be made of an electrically conductive material. This is to electrically connect the conducting wire member W, an external device connected to the conducting wire member W, etc. to the DC relay 40, the busbar 50, etc. That is, the conducting wire member W is electrically connected to the fixed contact point 42 of the DC relay 40 or the busbar 50 by the body unit 100.

In one embodiment, the body unit 100 may be made of copper (Cu), iron (Fe), or an alloy material containing one or more thereof.

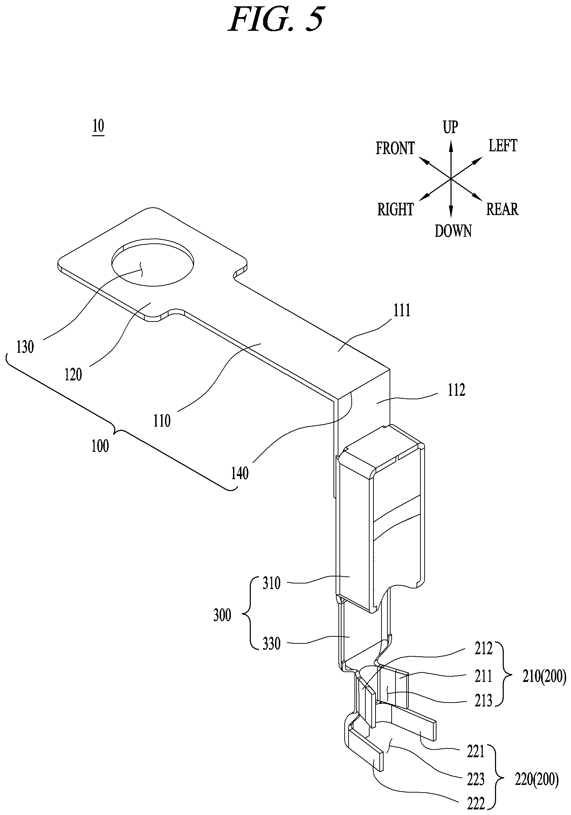

The body unit 100 may be configured to have a plate shape. In the embodiment illustrated in FIG. 5, the body unit 100 has a thickness in a vertical direction, and has a plate shape extending in a front-to-rear direction and in a left-to-right direction.

The body unit 100 is continuous with the conducting wire member coupling unit 200. In detail, the body unit 100 is coupled to the conducting wire member coupling unit 200 through the current-carrying member 300. In the illustrated embodiment, a lower rear end of the body unit 100 is coupled to the current-carrying member 300.

The body unit 100 is coupled to the conducting wire member coupling unit 300. Additionally, the body unit 100 is electrically connected to the current-carrying member 300. As will be described later, the current-carrying member 300 is coupled and electrically connected to the conducting wire member W. Accordingly, it may be understood that the body unit 100 is coupled to and electrically connected to the conducting wire member W by the current-carrying member 300.

The body unit 100 may be divided into a plurality of portions. Respective portions of the body unit 100 may have certain shapes and be coupled to and electrically connected to the DC relay 40, the busbar 50, and the current-carrying member 300, respectively.

In the illustrated embodiment, the body unit 100 includes an extension portion 110, a head portion 120, a coupling opening 130, and a bent portion 140.

The extension portion 110 is a portion of the body unit 100 which extends in a longitudinal direction. In the illustrated embodiment, the extension portion 110 is disposed to extend in a front-to-rear direction.

In the illustrated embodiment, the extension portion 110 is disposed to have a plate shape. In this case, a length of the extension portion 110 in a width direction, i.e., a left-to-right direction in the illustrated embodiment may be configured to be less than or equal to lengths of other portions of the body unit 100.

The extension portion 110 may be divided into a plurality of portions. The plurality of portion may constitute a certain angle to be continuous with each other. In the illustrated embodiment, the extension portion 110 includes a first extension portion 111 located relatively on a front side, and a second extension portion 112 disposed to be continuous with the first extension portion 111 and located relatively on a rear side.

The first extension portion 111 constitutes a portion of the extension portion 110, i.e., a front side in the illustrated embodiment. Compared to the second extension portion 112, the first extension portion 111 is located relatively further adjacent to the fixed contact point 42 and the busbar 50.

The first extension portion 111 is disposed to extend in one direction, i.e., in a front-to-rear direction in the illustrated embodiment. One end portion of the first extension portion 111 in the one direction, i.e., an end portion thereof on a front side in the illustrated embodiment is continuous with the head portion 120. Another end portion of the first extension portion 111 in the one direction, i.e., a rear end portion thereof in the illustrated embodiment is continuous with the second extension portion 112.

The second extension portion 112 constitutes another portion of the extension portion 110, i.e., a rear side thereof in the illustrated embodiment. Compared to the first extension portion 111, the second extension portion 112 is located relatively further apart from the fixed contact point 42 and the busbar 50.

The second extension portion 112 extends in another direction, i.e., in a vertical direction in the illustrated embodiment. One end portion of the second extension portion 112 in the another direction, i.e., an end portion thereof on an upper side in the illustrated embodiment is continuous with an end portion of the first extension portion 111 on a rear side. Another end portion of the second extension portion 112 in the another direction, i.e., an end portion thereof on a lower side in the illustrated embodiment is continuous with the current-carrying member 300.

The second extension portion 112 constitutes a certain angle to be continuous with the first extension portion 111. That is, a bent portion 140 is disposed in a portion in which the second extension portion 112 is continuous with the first extension portion 111. In one embodiment, the certain angle may be a right angle.

The head portion 120 is a portion in which the body unit 100 is coupled to the fixed contact point 42 and the busbar 50. Among portions of the body unit 100, the head portion 120 is a portion located closest to the fixed contact point 42 and the busbar 50.

In the illustrated embodiment, the head portion 120 is disposed to have a rectangular plate shape. In this case, a length of the head portion 120 in a longitudinal direction, i.e., a length thereof in a front-to-rear direction in the illustrated embodiment may be less than a length of the first extension portion 111 in the same direction.

In addition, a length of the head portion 120 in a width direction, i.e., a length thereof in a left-to-right direction in the illustrated embodiment may be greater than a length of the first extension portion 111 in the same direction.

This is because the coupling opening 130 is disposed through an inner side of the head portion 120, wherein the fastening member 60 is configured to penetrate through the coupling opening 130. That is, the head portion 120 may be desirably disposed to be sufficiently large to be coupled to the fixed contact point 42, the busbar 50, and the fastening member 60.

The head portion 120 is continuous with the first extension portion 111 of the extension portion 110. In the illustrated embodiment, a rear end portion of the head portion 120 is continuous with a front end portion of the first extension portion 111.

The head portion 120 is electrically connected to the extension portion 110. The current-carrying member 300 and the conducting wire member W coupled to the current-carrying member 300 may be electrically connected to the head portion 120 by the extension portion 110.

The head portion 120 is electrically connected to the fixed contact point 42 and the busbar 50. In one embodiment, the head portion 120 may be in contact with the fixed contact point 42 or the busbar 50 to be electrically connected. The head portion 120 covers the fixed contact point 42 or the busbar 50 to be coupled thereto.

The coupling opening 130 is disposed to penetrate through an inner side of the head portion 120.

The coupling opening 130 is a space through which the fastening member 60 penetrates. The coupling opening 130 is disposed through an inner side of the head portion 120 in a thickness direction of the head portion 120, i.e., in a vertical direction in the illustrated embodiment.

The coupling opening 130 may have any shape through which the fastening member 60 may penetrate. In the illustrated embodiment, the coupling opening 130 is disposed to have a round cross-section.

The bent portion 140 is a portion of the extension portion 110 in which the first extension portion 111 is continuous with the second extension portion 112. As described above, the first extension portion 111 and the second extension portion 112 are continuous with each other to define a certain angle. The bent portion 140 is constituted by the structure described above.

The bent portion 140 may be disposed to correspond to a shape of the enclosure 41 of the DC relay 40. In the illustrated embodiment, an outer surface of an upper part of the enclosure 41 to which the terminal structure 10 is coupled extends vertically. In the embodiment described above, the bent portion 140 may also have a shape bent at an angle of 90° so that the first extension portion 111 is vertically continuous with the second extension portion 112.

The conducting wire member coupling unit 200 is a portion in which the conducting wire member W is coupled to the terminal structure 10. The conducting wire member coupling unit 200 may be coupled to a plurality of conducting wire members W.

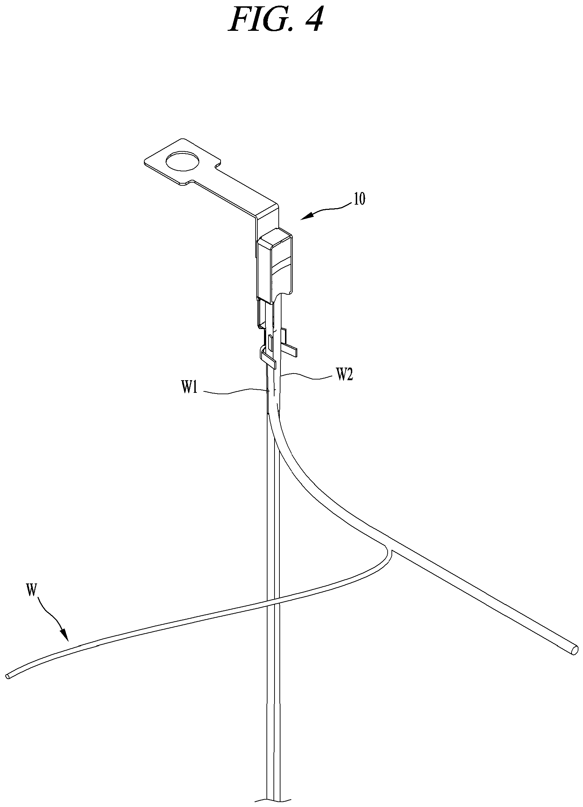

In the embodiment illustrated in FIG. 4, the first conducting wire member W1 and the second conducting wire member W2 are coupled to the conducting wire member coupling unit 200. In this case, the first conducting wire member W1 and the second conducting wire member W2 may be respectively constituted by combining a plurality of conducting wire members W. Accordingly, it may be understood that the conducting wire member coupling unit 200 is coupled to two or more conducting wire members W.

The conducting wire member coupling unit 200 is coupled to the body unit 100. In detail, the conducting wire member coupling unit 200 is coupled to the body unit 100 through the current-carrying member 300. In the illustrated embodiment, one end portion (i.e., an upper end portion) of the conducting wire member coupling unit 200 in an extension direction is coupled to one end portion (i.e., a lower end portion) of a current-carrying extension portion 330 of the current-carrying member 300 in an extension direction.

The conducting wire member coupling unit 200 may be made of a material that may be deformed in shape. In other words, the conducting wire member coupling unit 200 may be made of a ductile material. Accordingly, the conducting wire member coupling unit 200 may be deformed in shape and stably support the conducting wire members W coupled thereto.

The conducting wire member coupling unit 200 may be made of an electrically insulating material. This is to prevent a safety accident that may occur when the conducting wire member coupling unit 200 is arbitrarily electrically connected to the body unit 100 or the current-carrying member 300. To do so, the conducting wire member coupling unit 200 may be coated with an electrically insulating material.

The conducting wire member coupling unit 200 may be coupled to conducting wire members W at a plurality of positions to support the conducting wire members W. In the illustrated embodiment, the conducting wire member coupling unit 200 includes a first coupling unit 210 located on an upper side and a second coupling unit 220 located on a lower side to be coupled to the conducting wire members W at two positions to thereby support the conducting wire members W. Accordingly, a state of coupling between the conducting wire members W and the conducting wire member coupling unit 200 may be stably maintained.

The first coupling unit 210 constitutes one portion of the conducting wire member coupling unit 200. The first coupling unit 210 is coupled to the conducting wire member W on one side, i.e., on an upper side in the illustrated embodiment to support the conducting wire member W. In other words, compared to the second coupling unit 220, the first coupling unit 210 is located further adjacent to the current-carrying member 300.

Additionally, the first coupling unit 210 is continuous with the current-carrying member 300. In detail, respective end portions of the first coupling unit 210 and the current-carrying member 300 facing each other are continuous with each other. In the illustrated embodiment, an upper end portion of the first coupling unit 210 is continuous with a lower end portion of the current-carrying extension portion 330 of the current-carrying member 300.

The first coupling unit 210 is continuous with the second coupling unit 220. In detail, respective end portions of the first coupling unit 210 and the second coupling unit 220 facing each other are continuous with each other. In the illustrated embodiment, a lower end portion of the first coupling unit 210 is continuous with an upper end portion of the second coupling unit 220.

The first coupling unit 210 may be coupled to the conducting wire members W to have any form capable of supporting the conducting wire members W. In the illustrated embodiment, the first coupling unit 210 includes a first support wing 211, a second support wing 212, and a first accommodating space 213.

The first support wing 211 supports the conducting wire members W accommodated in the first accommodating space 213 by pressing the conducting wire members W from one side in a radial direction. In the illustrated embodiment, the first support wing 211 is configured to press the conducting wire member W from left and rear sides.

The first support wing 211 partially surrounds the first accommodating space 213. In the illustrated embodiment, the first support wing 211 is arranged to surround the first accommodating space 213 on a left side.

The first support wing 211 may be configured to be deformable in shape by an external force. As described above, since the conducting wire member coupling unit 200 is made of a ductile material, the first support wing 211 may be maintained in a shape deformed by an external force.

When an external force is applied to the first support wing 211, the first support wing 211 may be disposed to surround a large portion of the first accommodating space 213. As an example, the first support wing 211 which has been deformed in shape may surround the first accommodating space 213 not only on a left side but also on a rear side.

The first support wing 211 is continuous with the current-carrying extension portion 330. The first support wing 211 is disposed to extend in one direction against the body unit 100, i.e., a direction toward a rear left side in the illustrated embodiment. An extending length of the first support wing 211 may be preferably long enough to support all of a plurality of conducting wire members W accommodated in the first accommodating space 213.

The first support wing 211 is configured to have a certain height. In the illustrated embodiment, the first support wing 211 is disposed to extend by a certain length in a vertical direction. In this case, an extending length of the first support wing 211 in the vertical direction may be greater than heights of support arms 221 and 222 of the second coupling unit 220.

The first support wing 211 is disposed to face the second support wing 212 to have the first accommodating space 213 disposed therebetween.

The second support wing 212 supports the conducting wire members W accommodated in the first accommodating space 213 by pressing the conducting wire member W from another side in a radial direction. In the illustrated embodiment, the second support wing 212 is configured to press the conducting wire members W from right and rear sides.

The second support wing 212 partially surrounds the first accommodating space 213. In the illustrated embodiment, the second support wing 212 is arranged to surround the first accommodating space 213 on a right side.

The second support wing 212 may be configured to be deformable in shape by an external force. As described above, since the conducting wire member coupling unit 200 is made of a ductile material, the second support wing 212 may be maintained in a shape deformed by an external force.

When an external force is applied to the second support wing 212, the second support wing 212 may be disposed to surround a large portion of the first accommodating space 213. As an example, the second support wing 212 which has been deformed in shape may surround the first accommodating space 213 not only on a right side but also on a rear side.

Additionally, the second support wing 212 is continuous with the current-carrying extension portion 330. The second support wing 212 is disposed to extend in another direction which is directed against the body unit 100, i.e., a direction toward a rear right side in the illustrated embodiment. An extending length of the second support wing 212 may be preferably long enough to support all of a plurality of conducting wire members W accommodated in the first accommodating space 213.

The second support wing 212 is configured to have a certain height. In the illustrated embodiment, the second support wing 212 is disposed to extend by a certain length in a vertical direction. In this case, an extending length of the second support wing 212 in the vertical direction may be equal to an extending length of the first support wing 211, but greater than heights of the support arms 221 and 222 of the second coupling unit 220.

The second support wing 212 is disposed to face the first support wing 211 to have the first accommodating space 213 disposed therebetween. The second support wing 212 is deformed in shape together with the first support wing 211 to surround one open portion of the first accommodating space 213, i.e., a rear side in the illustrated embodiment.

The first accommodating space 213 is a space in which the conducting wire members W are accommodated. The first accommodating space 213 is disposed to be surrounded by the first support wing 211 and the second support wing 212. In the illustrated embodiment, the first accommodating space 213 is configured such that a left side thereof is surrounded by the first support wing 211 and a right side thereof is surrounded by the second support wing 212.

In addition, in a state in which the first coupling unit 210 is not deformed in shape, one side of the first accommodating space 213 directed against the body unit 100, i.e., a rear side thereof in the illustrated embodiment is configured to be open. A worker may easily insert the conducting wire members W through the one side configured to be open.

Volume of the first accommodating space 213 may be variable. This is achieved by applying an external force to the first support wing 211 and the second support wing 212 to deform shapes of the first support wing 211 and the second support wing 212.

After the conducting wire members W are accommodated, when the first support wing 211 and the second support wing 212 are pressed toward each other, the one side configured to be open, i.e., a rear side in the illustrated embodiment is closed. Accordingly, the conducting wire members W accommodated in the first accommodating space 213 may be prevented from being arbitrarily separated in a horizontal direction, i.e., to a front, rear, left, or right side.

The first accommodating space 213 communicates with a second accommodating space 223. The conducting wire members W accommodated in the first accommodating space 213 may extend to the second accommodating space 223. To do so, one side of the first accommodating space 213 directing toward the second coupling unit 220, i.e., a lower side thereof in the illustrated embodiment is configured to be open.

Another side of the first accommodating space 213 directing toward the current-carrying member 300, i.e., an upper side thereof in the illustrated embodiment is configured to be open. The conducting wire members W accommodated in the first accommodating space 213 may extend to a conducting wire member current-carrying unit 320 to be coupled to the current-carrying member 300.

That is, even after the shapes of the first support wing 211 and the second support wing 212 are deformed, the first accommodating space 213 is configured to be open in a height direction, i.e., a vertical direction in the illustrated embodiment.

The second coupling unit 220 constitutes another portion of the conducting wire member coupling unit 200. Another side of the second coupling unit 220, i.e., a lower side thereof in the illustrated embodiment is coupled to the conducting wire members W to support the conducting wire members W. In other words, compared to the first coupling unit 210, the second coupling unit 220 is located further apart from the current-carrying member 300.

The second coupling unit 220 is continuous with the current-carrying member 300. In detail, the second coupling unit 220 is continuous with the current-carrying member 300 through the first coupling unit 210. Respective end portions of the first coupling unit 220 and the second coupling unit 210 facing each other are continuous with each other. In the illustrated embodiment, an upper end portion of the second coupling unit 220 is continuous with a lower end portion of the second coupling unit 210.

The second coupling unit 220 may be coupled to the conducting wire members W to have any form capable of supporting the conducting wire members W. In the illustrated embodiment, the second coupling unit 220 includes the support arms 221 and 222, i.e., first and second support arms, and the second accommodating space 223.

The first support arm 221 supports the conducting wire members W accommodated in the second accommodating space 223 by pressing the conducting wire members W from one side in a radial direction. In the illustrated embodiment, the first support arm 221 is configured to press the conducting wire members W on front, left, and rear sides. That is, the first support arm 221 is configured to press the conducting wire members W at a same position as that of the first support wing 211.

The first support arm 221 partially surrounds the second accommodating space 223. In the illustrated embodiment, the first support arm 221 is arranged to surround the second accommodating space 223 on front and left sides.

The first support arm 221 may be disposed to be deformable in shape by an external force. As described above, since the conducting wire member coupling unit 200 is made of a ductile material, the first support arm 221 may be maintained in a shape deformed by an external force.

When an external force is applied to the first support arm 221, the first support arm 221 may be disposed to surround a large portion of the second accommodating space 223. As an example, the first support arm 221 which has been deformed in shape may surround the second accommodating space 223 not only on front and left sides but also on a rear side.

The first support arm 221 is continuous with the second support arm 222. The first support arm 221 is disposed to extend in a direction against the second support arm 222, i.e., a direction toward a rear left side in the illustrated embodiment. In other words, the first support arm 221 is disposed to extend in a direction against the second support arm 222.

An extending length of the first support arm 221 may be preferably long enough to support all of a plurality of conducting wire members W accommodated in the second accommodating space 223.

The first support arm 221 is configured to have a certain height. In the illustrated embodiment, the first support arm 221 is disposed to extend by a certain length in a vertical direction. In this case, an extending length of the first support arm 221 in the vertical direction may be less than heights of the first and second support wings 211 and 212 of the first coupling unit 210.

The first support arm 221 is disposed to face the second support arm 222 to have the second accommodating space 223 disposed therebetween.

The second support arm 222 supports the conducting wire members W accommodated in the second accommodating space 223 by pressing the conducting wire members W from another side in a radial direction. In the illustrated embodiment, the second support arm 222 is configured to press the conducting wire members W from front, right, and rear sides. That is, the second support arm 222 is configured to press the conducting wire members W at a same position as that of the second support wing 212.

The second support arm 222 partially surrounds the second accommodating space 223. In the illustrated embodiment, the second support arm 222 is arranged to surround the second accommodating space 223 on front and right sides.

The second support arm 222 may be disposed to be deformable in shape by an external force. As described above, since the conducting wire member coupling unit 200 is made of a ductile material, the second support arm 222 may be maintained in a shape deformed by an external force.

When an external force is applied to the second support arm 222, the second support arm 222 may be disposed to surround a large portion of the second accommodating space 223. As an example, the second support arm 222 which has been deformed in shape may surround the second accommodating space 223 not only on a front side and a right side but also on a rear side.

The second support arm 222 is continuous with the first support arm 221. The second support arm 222 is disposed to extend in a direction against the first support arm 221, i.e., a direction toward a rear right side in the illustrated embodiment. In other words, the second support arm 222 extends in a direction against the first support arm 221.

An extending length of the second support arm 222 may be preferably long enough to support all of a plurality of conducting wire members W accommodated in the second accommodating space 223.

The second support arm 222 is configured to have a certain height. In the illustrated embodiment, the second support arm 222 is disposed to extend by a certain length in a vertical direction. In this case, an extending length of the second support arm 222 in the vertical direction may be less than heights of the first and second support wings 211 and 212 of the first coupling unit 210.

The second support arm 222 is disposed to face the first support arm 221 to have the second accommodating space 223 disposed therebetween. The second support arm 222 is deformed in shape together with the first support arm 221 to surround one open portion of the second accommodating space 223, i.e., a rear side thereof in the illustrated embodiment.

The second accommodating space 223 is another space in which the conducting wire members W are accommodated. The second accommodating space 223 is disposed to be surrounded by the first support arm 221 and the second support arm 222. In the illustrated embodiment, the second accommodating space 223 is configured such that a left side thereof is surrounded by the first support arm 221 and a right side thereof is surrounded by the second support arm 222.

In addition, in a state when the first coupling unit 210 is not deformed in shape, one side of the second accommodating space 223 directed against the body unit 100, i.e., a rear side thereof in the illustrated embodiment is configured to be open. A worker may easily insert the conducting wire members W through the one side configured to be open.

Volume of the second accommodating space 223 may be variable. This is achieved by applying an external force to the first support arm 221 and the second support arm 222 to deform shapes of the first support arm 221 and the second support arm 222.

After the conducting wire members W are accommodated, when the first support arm 221 and the second support arm 222 are pressed toward each other, the one side configured to be open, i.e., a rear side in the illustrated embodiment is closed. Accordingly, the conducting wire members W accommodated in the second accommodating space 223 may be prevented from being arbitrarily separated in a horizontal direction, i.e., to a front, rear, left, or right side.

The second accommodating space 223 communicates with the first accommodating space 213. The conducting wire members W accommodated in the second accommodating space 223 may extend to the first accommodating space 213. To do so, one side of the second accommodating space 223 directing toward the first coupling unit 210, i.e., an upper side thereof in the illustrated embodiment is configured to be open.

Another side of the second accommodating space 223 directing against the first coupling unit 210, i.e., a lower side thereof in the illustrated embodiment is configured to be open. The conducting wire members W accommodated in the second accommodating space 223 may extend from outside of the terminal structure 10.

That is, even after shapes of the first support arm 221 and the second support arm 222 are deformed, the second accommodating space 223 is configured to be open in a height direction, i.e., a vertical direction in the illustrated embodiment.

The current-carrying member 300 is coupled to and electrically connected to the conducting wire members W. The current-carrying member 300 is electrically connected to the DC relay 40 and the busbar 50 through the body unit 100. The conducting wire member W may be electrically connected to the DC relay 40 and the busbar 50 through the current-carrying member 300.

The current-carrying member 300 is configured to detect a magnitude of current flowing between the conducting wire members W, the DC relay 40, and the busbar 50, a temperature generated by the current, or the like. To do so, the current-carrying member 300 may include a current or voltage sensor, a temperature sensor, etc.

The current-carrying member 300 is coupled to the body unit 100. In one embodiment, the current-carrying member 300 may be coupled to one end of the body unit 100 in an extension direction. In the illustrated embodiment, the current-carrying member 300 is coupled to a lower end of the extension portion 110, i.e., one end of the second extension portion 112.

The current-carrying member 300 is electrically connected to the body unit 100. Accordingly, the conducting wire members W coupled to the current-carrying member 300 may also be electrically connected to the body unit 100.

The current-carrying member 300 is coupled to the conducting wire member coupling unit 200. In one embodiment, the current-carrying member 300 may be coupled to one end of the conducting wire member coupling unit 200 in an extension direction. In the illustrated embodiment, the current-carrying member 300 is coupled to an upper end portion of the first coupling unit 210.

The current-carrying member 300 extends in one direction, i.e., a vertical direction the illustrated embodiment. One end portion of the current-carrying member 300 in an extension direction, i.e., an upper end portion thereof in the illustrated embodiment is continuous with the body unit 100. Another end portion of the current-carrying member 300 in an extension direction, i.e., a lower end portion thereof in the illustrated embodiment is continuous with the conducting wire member coupling unit 200.

The current or voltage sensor, the temperature sensor, etc. described above may be accommodated in the current-carrying member 300. To do so, the current-carrying member 300 may include a component configured to accommodate the sensors described above, and a component configured to be coupled to the conducting wire members W, etc. In one embodiment, a thermistor may be accommodated inside the current-carrying member 300 and configured to sense information about a temperature of an external device.

In the illustrated embodiment, the current-carrying member 300 includes a current-carrying body 310, the conducting wire member current-carrying unit 320, and a current-carrying extension portion 330.

The current-carrying body 310 constitutes a body of the current-carrying member 300. A space may be defined in the current-carrying body 310 to accommodate the current or voltage sensor, the temperature sensor, etc. described above. The space in the current-carrying body 310 is electrically connected to outside. Accordingly, the current or voltage sensor, the temperature sensor, etc. each accommodated inside the current-carrying body 310 may be electrically connected to the conducting wire members W and the body unit 100 each disposed outside.

To do so, the conducting wire members W and the body unit 100 may penetrate through an outer surface of the current-carrying body 310 to extend to inside of the current-carrying body 310.

In addition, any member configured to electrically connect the conducting wire members W and the body unit 100, e.g., another conducting wire member, etc. may be accommodated in the current-carrying body 310.

The current-carrying body 310 may have any shape in which a space for accommodating the sensors or any member each described above may be disposed. In the illustrated embodiment, the current-carrying body 310 has a rectangular cylindrical shape extending in a vertical direction.

The current-carrying body 310 is coupled to the body unit 100. In detail, one end of the current-carrying body 310 in an extension direction, i.e., an upper end portion thereof in the illustrated embodiment is coupled to the extension portion 110 of the body unit 100, in detail, a lower end portion of the second extension portion 112.

The conducting wire member current-carrying unit 320 is disposed in the current-carrying body 310. In this case, the conducting wire member current-carrying unit 320 may be disposed on one side of the current-carrying body 310 directing toward the conducting wire member coupling unit 200. In the illustrated embodiment, the conducting wire member current-carrying unit 320 is disposed on a lower side of the current-carrying body 310.

The conducting wire members W may be coupled to the conducting wire member current-carrying unit 320 to be electrically connected to the sensors or any member accommodated in the current-carrying body 310.

The current-carrying body 310 is continuous with the current-carrying extension portion 330. In detail, another end portion of the current-carrying body 310 in an extension direction, i.e., a lower end portion thereof in the illustrated embodiment is continuous with an upper end portion of the current-carrying extension portion 330.

The current-carrying body 310 may be made of an electrically insulating material. The conducting wire members W may be electrically connected to various accommodated sensors and the body unit 100 through the conducting wire member current-carrying unit 320, while blocking electrical connection to an outer surface of the current-carrying body 310. Accordingly, occurrence of safety accidents that may be caused by current passing through the terminal structure 10 may be prevented.

That is, the current-carrying body 310 functions as an electrically insulating housing.

The conducting wire member current-carrying unit 320 is a portion in which the conducting wire member W is coupled to the current-carrying member 300. The conducting wire member current-carrying unit 320 may be coupled and electrically connected to the conducting wire members W.

The conducting wire member current-carrying unit 320 may be coupled to the conducting wire members W to have any shape which may be electrically connected to various sensors or any member accommodated in the current-carrying body 310.

In one embodiment, the conducting wire member current-carrying unit 320 may be configured to have a form of an opening into which the conducting wire members W may be coupled. The conducting wire members W may penetrate through the conducting wire member current-carrying unit 320 to be coupled and electrically connected to various components accommodated in the current-carrying body 310.

The conducting wire member current-carrying unit 320 is disposed on the current-carrying body 310. The conducting wire member current-carrying unit 320 is disposed on one side directing toward the conducting wire member coupling unit 200, i.e., on a lower side of the current-carrying body 310 in the illustrated embodiment. Accordingly, end portions of the conducting wire members W coupled to the conducting wire member coupling unit 200 may be easily coupled to the conducting wire member current-carrying unit 320.

The current-carrying extension portion 330 is connected to the current-carrying body 310 to support the current-carrying body 310. In addition, the current-carrying extension portion 330 is a portion in which the current-carrying member 300 is coupled to the conducting wire member coupling unit 200.

The current-carrying extension portion 330 is disposed to extend in a same direction as that of the current-carrying body 310, i.e., in a vertical direction in the illustrated embodiment. One end portion of the current-carrying extension portion 330 in an extension direction, i.e., an upper end portion thereof in the illustrated embodiment is continuous with a lower end portion of the current-carrying body 310. Another end portion of the current-carrying extension portion 330 in an extension direction, i.e., a lower end portion thereof in the illustrated embodiment is continuous with an upper end portion of the first coupling unit 210 of the conducting wire member coupling unit 200.

The conducting wire member W is partially seated in the current-carrying extension portion 330. That is, the conducting wire member W may extend from the first coupling unit 210 to the conducting wire member current-carrying unit 320 across the current-carrying extension portion 330.

With respect to the terminal structure 10 described above according to the present embodiment, a plurality of conducting wire members W configured to be electrically connected to a plurality of sensors, circuits, etc. may be electrically connected and coupled to a single terminal structure 10. The single terminal structure 10 may be coupled and electrically connected to the fixed contact point 42, the busbar 50, etc.

In an embodiment in which a plurality of fixed contact points 42 including the first fixed contact point 42a and the second fixed contact point 42b are equipped, a plurality of terminal structures 10 may also be equipped. In this case, the plurality of terminal structures 10 may be coupled and electrically connected to a plurality of conducting wire members W, respectively.

Accordingly, a wiring structure needed to electrically connect the plurality of conducting wire members W to the DC relay 40, the busbar 50, etc. may become simple and concise.

### 3. Description of a terminal structure 20 according to another embodiment of the present disclosure

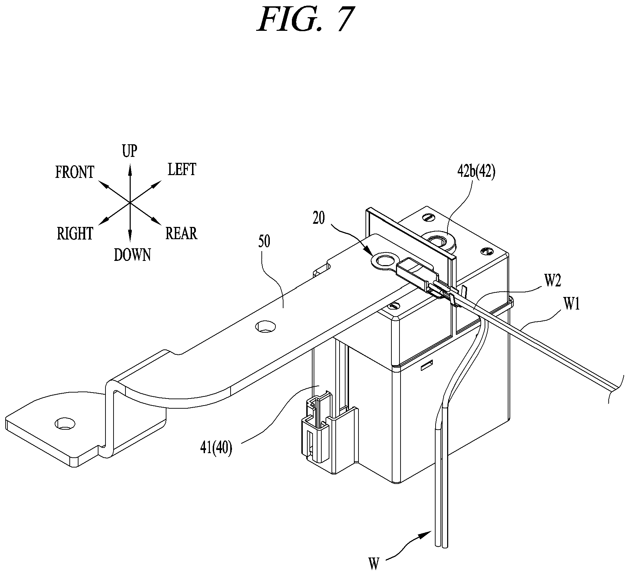

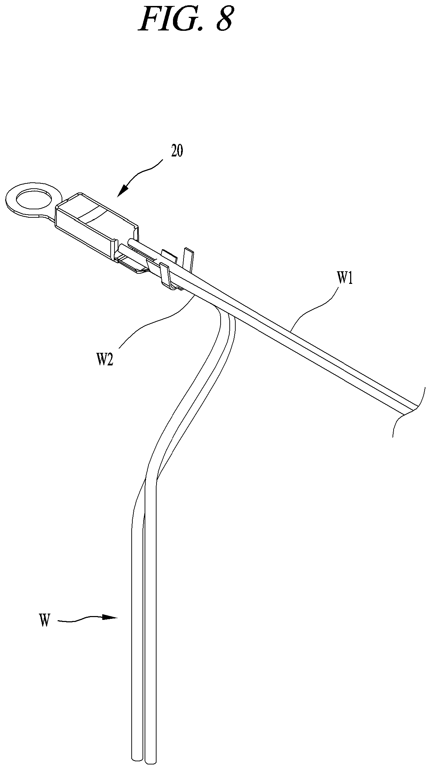

Referring to FIGS. 7 to 9, the terminal structure 20 according to another embodiment of the present disclosure is illustrated. In the illustrated embodiment, the terminal structure 20 includes the body unit 100, the conducting wire member coupling unit 200, and the current-carrying member 300.

Compared to the terminal structure 10 to the above-described embodiment, the terminal structure 20 according to the present embodiment includes the body unit 100 having a different shape. Except for this difference, the terminal structure 20 according to the present embodiment has a structure, a function, and a coupling structure identical to those of the terminal structure 10 according to the above-described embodiment.

Accordingly, hereinafter, the terminal structure 20 according to the present embodiment is described in detail with reference to the body unit 100.

The body unit 100 constitutes an outer form of the terminal structure 20. The body unit 100 is a portion in which the terminal structure 20 is coupled to the DC relay 40 or the busbar 50.

The body unit 100 may be made of an electrically conductive material. This is to electrically connect the conducting wire member W, an external device connected thereto, etc. to the DC relay 40, the busbar 50, etc. That is, the conducting wire member W is electrically connected to the fixed contact point 42 or the busbar 50 of the DC relay 40 by the body unit 100.

In one embodiment, the body unit 100 may be made of copper (Cu), iron (Fe), or an alloy material containing one or more thereof.

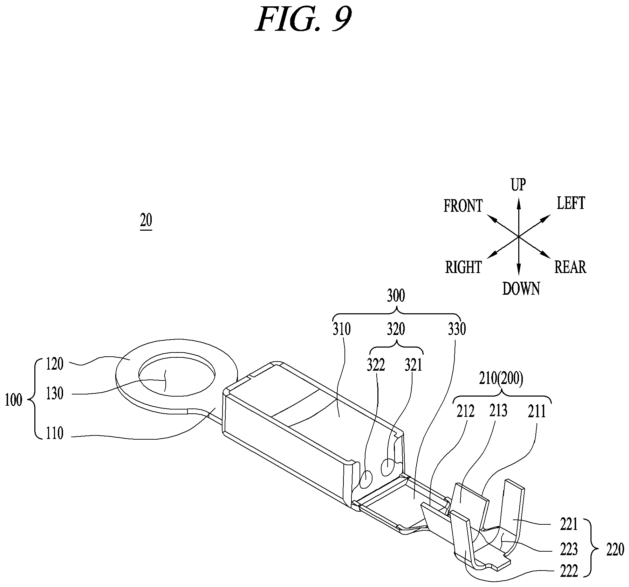

The body unit 100 may be configured to have a plate shape. In the embodiment illustrated in FIG. 9, the body unit 100 has a thickness in a vertical direction and is configured to have a plate shape extending in a front-to-rear direction and in a left-to-right direction.

The body unit 100 is continuous with the conducting wire member coupling unit 200. In detail, the body unit 100 is coupled to the conducting wire member coupling unit 200 through the current-carrying member 300. In the illustrated embodiment, a rear end portion of the body unit 100 is coupled to the current-carrying member 300.

The body unit 100 is coupled to the current-carrying member 300. Additionally, the body unit 100 is electrically connected to the current-carrying member 300. Since the current-carrying member 300 is coupled and electrically connected to the conducting wire member W, it may be understood that the body unit 100 is coupled and electrically connected to the conducting wire member W by the current-carrying member 300.

The body unit 100 may be divided into a plurality of portions. Respective parts of the body unit 100 may have a certain shape, and be coupled and electrically connected to the DC relay 40, the busbar 50, and the current-carrying member 300, respectively.

In the illustrated embodiment, the body unit 100 includes the extension portion 110, the head portion 120, and the coupling opening 130.

That is, the bent portion 140 included in the body unit 100 of the terminal structure 10 according to the above-described embodiment is not disposed in the body unit 100 of the terminal structure 20 according to the present embodiment. Accordingly, the extension portion 110 extends flatly without any bent portion.

The extension portion 110 is a portion of the body unit 100 which extends in a longitudinal direction. In the illustrated embodiment, the extension portion 110 is disposed flatly to extend in a front-to-rear direction.

In the illustrated embodiment, the extension portion 110 is disposed to have a plate shape. In this case, a length of the extension portion 110 in a width direction, i.e., a left-to-right direction in the illustrated embodiment may be configured to be less than or equal to lengths of other portions of the body unit 100.

The head portion 120 is a portion in which the body unit 100 is coupled to the fixed contact point 42 and the busbar 50. Among portions of the body unit 100, the head portion 120 is located most adjacent to the fixed contact point 42 and the busbar 50.

In the illustrated embodiment, the head portion 120 is disposed to have a round plate shape. Alternatively, the head portion 120 may be disposed to have a polygonal plate shape like the head portion 120 of the terminal structure 10 according to the above-described embodiment.

The head portion 120 may be desirably disposed to be sufficiently large to be coupled to the fixed contact point 42, the busbar 50, and the fastening member 60.

The head portion 120 is continuous with the extension portion 110. In the illustrated embodiment, a rear end portion of the head portion 120 is continuous with a front end portion of the extension portion 110.

The head portion 120 is electrically connected to the extension portion 110. The current-carrying member 300 and the conducting wire member W coupled thereto may be electrically connected to the head portion 120 by the extension portion 110.

The head portion 120 is electrically connected to the fixed contact point 42 and the busbar 50. In one embodiment, the head portion 120 may be in contact with the fixed contact point 42 or the busbar 50 to be electrically connected. The head portion 120 covers the fixed contact point 42 or the busbar 50 to be coupled thereto.

The coupling opening 130 is disposed through inside of the head portion 120.

The coupling opening 130 is a space through which the fastening member 60 penetrates. The coupling opening 130 is disposed through the inside of the head portion 120 in a thickness direction of the head portion 120, i.e., in a vertical direction in the illustrated embodiment.

The coupling opening 130 may have any shape through which the fastening member 60 may penetrate. In the illustrated embodiment, the coupling opening 130 is disposed to have a round cross-section. In the above-described embodiment, the coupling opening 130 and the head portion 120 may be disposed to have a same central axis.

With respect to the terminal structure 20 described above according to the present embodiment, a plurality of conducting wire members W configured to be electrically connected to a plurality of sensors, circuits, etc. may be electrically connected and coupled to a single terminal structure 10. The single terminal structure 20 may be coupled and electrically connected to the fixed contact point 42, the busbar 50, etc.

In an embodiment in which a plurality of fixed contact points 42 including the first fixed contact point 42a and the second fixed contact point 42b are equipped, a plurality of terminal structures 20 may also be equipped. In this case, the plurality of terminal structures 20 may be coupled and electrically connected to a plurality of conducting wire members W.

Accordingly, a wiring structure needed to electrically connect the plurality of conducting wire members W to the DC relay 40, the busbar 50, etc. may become simple and concise.

Further, when a member to be coupled needs to be disposed flatly due to a structure of the DC relay 40 or the busbar 50, the terminal structure 20 according to the present embodiment may be adopted.

In this case, the body unit 100 includes the extension portion 110, the head portion 120, and the coupling opening portion 130 without a separate bent portion 140. Accordingly, a length of the body unit 100 and a whole length of the terminal structure 20 according to the present embodiment may be configured to be less than a length of the body unit 100 and a whole length of the terminal structure 10 according to the above-described embodiment.

Accordingly, it may be understood that the terminal structure 20 according to the present embodiment may be adopted when an installation environment of the terminal structure 20 is small.

### 4. Description of a terminal structure 30 according to another embodiment of the present disclosure

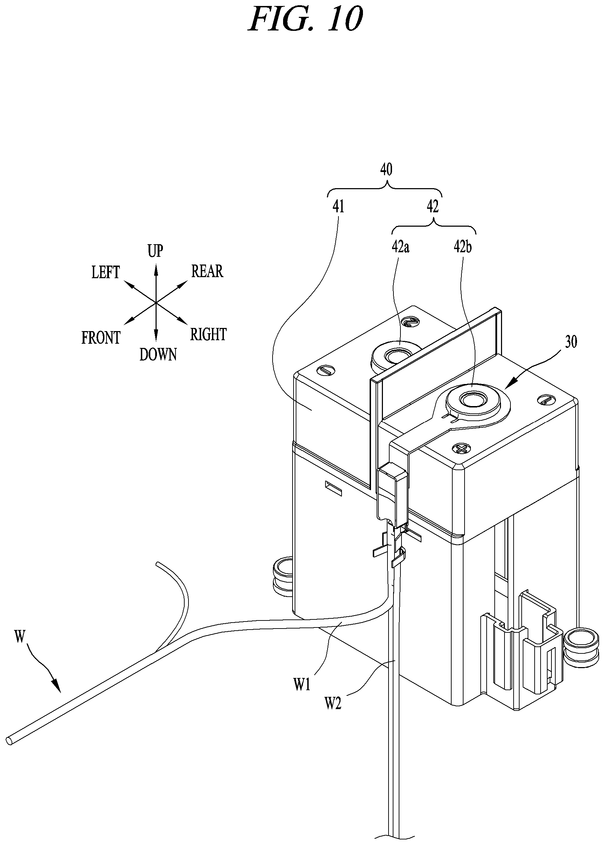

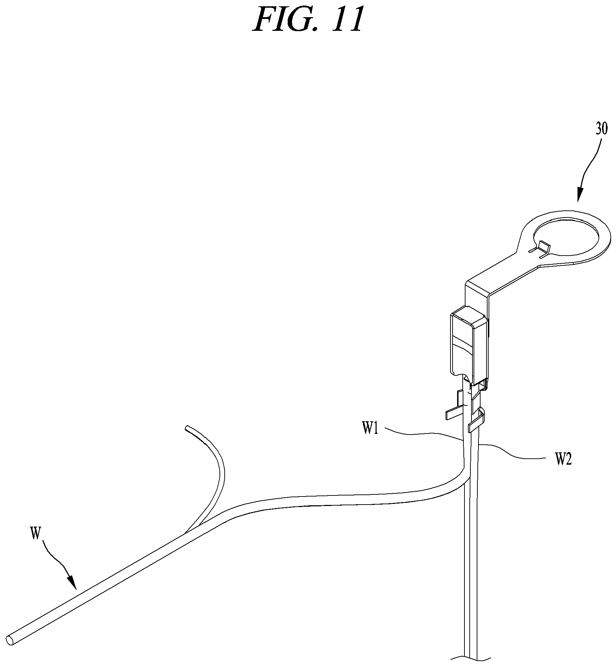

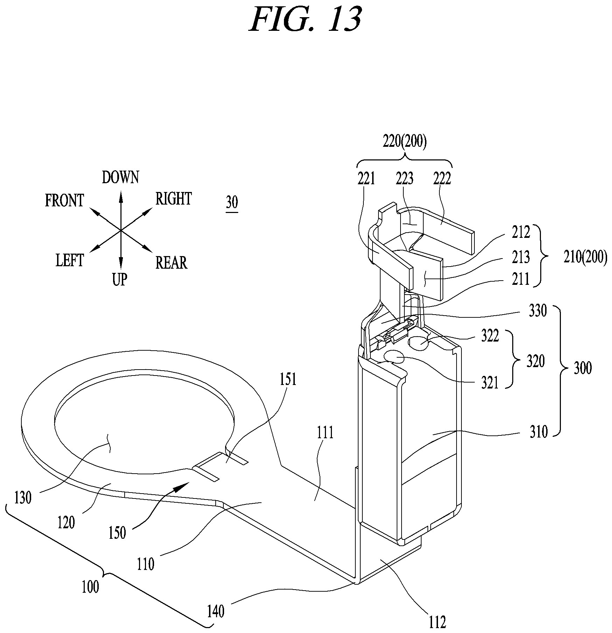

Referring to FIGS. 10 to 13, the terminal structure 30 according to another embodiment of the present disclosure is illustrated. In the illustrated embodiment, the terminal structure 30 includes the body unit 100, the conducting wire member coupling unit 200, and the current-carrying member 300.

Compared to the terminal structures 10 and 20 according to the above-described embodiments, the terminal structure 30 according to the present embodiment includes the body unit 100 having a different shape. Except for this difference, the terminal structure 30 according to the present embodiment has a structure, a function, and a coupling structure identical to those of the terminal structures 10 and 20 according to the above-described embodiments.

Particularly, the body unit 100 of the terminal structure 30 according to the present embodiment is deformed in shape to be directly coupled to the fixed contact point 42.

Accordingly, hereinafter, the terminal structure 20 according to the present embodiment is described in detail with reference to the body unit 100.

The body unit 100 constitutes an outer form of the terminal structure 30. The body unit 100 is a portion in which the terminal structure 30 is coupled to the DC relay 40 or the busbar 50.

The body unit 100 may be made of an electrically conductive material. This is to electrically connect the conducting wire member W, an external device connected thereto, etc. to the DC relay 40, the busbar 50, etc. That is, the conducting wire member W is electrically connected to the fixed contact point 42 of the DC relay 40 or the busbar 50 by the body unit 100.

In one embodiment, the body unit 100 may be made of Cu, Fe, or an alloy material containing one or more thereof.

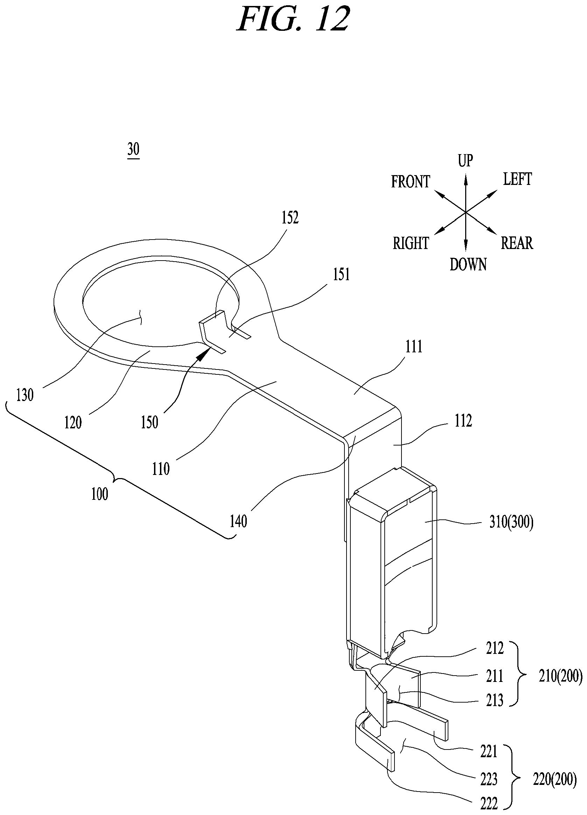

The body unit 100 may be configured to have a plate shape. In the embodiment illustrated in FIG. 12, the body unit 100 has a thickness in a vertical direction and is configured to have a plate shape extending in a front-to-rear direction and in a left-to-right direction.

The body unit 100 is continuous with the conducting wire member coupling unit 200. In detail, the body unit 100 is coupled to the conducting wire member coupling unit 200 through the current-carrying member 300. In the illustrated embodiment, a lower rear end of the body unit 100 is coupled to the current-carrying member 300.

The body unit 100 is coupled to the current-carrying member 300. Additionally, the body unit 100 is electrically connected to the current-carrying member 300. As will be described later, the current-carrying member 300 is coupled and electrically connected to the conducting wire member W. Accordingly, it may be understood that the body unit 100 is coupled and electrically connected to the conducting wire member W by the current-carrying member 300.

The body unit 100 may be divided into a plurality of portions. Respective parts of the body unit 100 may have a certain shape, and be coupled and electrically connected to the DC relay 40, the busbar 50, and the current-carrying member 300, respectively.

In the illustrated embodiment, the body unit 100 includes the extension portion 110, the head portion 120, the coupling opening 130, the bent portion 140, and a coupling protruding portion 150.

That is, the body unit 100 of the terminal structure 30 according to the present embodiment further includes the coupling protruding portion 150 which is a structure for directly coupling the fixed contact point 42 to the body unit 100.

The extension portion 110 is a portion of the body unit 100 that extends in a longitudinal direction. In the illustrated embodiment, the extension portion 110 is disposed to extend in a front-to-rear direction.

In the illustrated embodiment, the extension portion 110 is disposed to have a plate shape. In this case, a length of the extension portion 110 in a width direction. i.e., a left-to-right direction in the illustrated embodiment may be configured to be less than or equal to lengths of other portions of the body unit 100.

The extension portion 110 may be divided into a plurality of portions. The plurality of portions may define a certain angles to be continuous with each other. In the illustrated embodiment, the extension portion 110 includes the first extension portion 111 located relatively on a front side, and the second extension portion 112 disposed to be continuous with the first extension portion 111 and located relatively on a rear side.

The first extension portion 111 constitutes a portion of the extension portion 110, i.e., a front side in the illustrated embodiment. Compared to the second extension portion 112, the first extension portion 111 is located relatively adjacent to the fixed contact point 42 and the busbar 50.

The first extension portion 111 extends in one direction, i.e., in a front-to-rear direction in the illustrated embodiment. One end portion of the first extension portion 111 in the one direction, i.e., a front end portion thereof in the illustrated embodiment is continuous with the head portion 120. Another end portion of the first extension portion 111 in the one direction, i.e., a rear end portion thereof in the illustrated embodiment is continuous with the second extension portion 112.

The second extension portion 112 constitutes another portion of the extension portion 110, i.e., a rear side in the illustrated embodiment. Compared to the first extension part 111, the second extension portion 112 is located relatively apart from the fixed contact point 42 and the busbar 50.

The second extension portion 112 extends in another direction, i.e., in a vertical direction in the illustrated embodiment. One end portion of the second extension portion 112 in the another direction, i.e., an upper end portion thereof in the illustrated embodiment is continuous with a rear end portion of the first extension portion 111. Another end portion of the second extension portion 112 in the another direction, i.e., a lower end portion thereof in the illustrated embodiment is continuous with the current-carrying member 300.

The second extension portion 112 defines a certain angle to be continuous with the first extension portion 111. That is, the bent portion 140 is disposed in a portion in which the second extension portion 112 is continuous with the first extension portion 111. In one embodiment, the certain angle may be a right angle.

The head portion 120 is a portion in which the body unit 100 is coupled to the fixed contact point 42 and the busbar 50. Among portions of the body unit 100, the head portion 120 is located closest to the fixed contact point 42 and the busbar 50.

In the illustrated embodiment, the head portion 120 is disposed to have a round plate shape. Alternatively, the head portion 120 may be disposed to have a polygonal plate shape like the head portion 120 of the terminal structure 10 according to the above-described embodiment.

In addition, a length of the head portion 120 in a width direction, i.e., a length thereof in a left-to-right direction in the illustrated embodiment may be greater than a length of the first extension portion 111 in the same direction.

The head portion 120 may be desirably disposed to be sufficiently large to be coupled to the fixed contact point 42, the busbar 50, and the fastening member 60.

The head portion 120 is continuous with the first extension portion 111 of the extension portion 110. In the illustrated embodiment, a rear end portion of the head portion 120 is continuous with a front end portion of the first extension portion 111.

The head portion 120 is electrically connected to the extension portion 110. The current-carrying member 300 and the conducting wire member W coupled thereto may be electrically connected to the head portion 120 by the extension portion 110.

The head portion 120 is electrically connected to the fixed contact point 42 and the busbar 50. In one embodiment, the head portion 120 may be in contact with the fixed contact point 42 or the busbar 50 to be electrically connected. The head portion 120 covers the fixed contact point 42 or the busbar 50 to be coupled thereto.

The coupling opening 130 is disposed through inside of the head portion 120.

The coupling opening 130 is a space through which the fastening member 60 penetrates. The coupling opening 130 is disposed through the inside of the head portion 120 in a thickness direction of the head portion 120, i.e., in a vertical direction in the illustrated embodiment.

The coupling opening 130 may have any shape through which the fastening member 60 may penetrate. In the illustrated embodiment, the coupling opening 130 is disposed to have a round cross-section.

In this case, the terminal structure 30 according to the present embodiment is configured to be directly coupled to the fixed contact point 42. In one embodiment, the terminal structure 30 may be coupled to the DC relay 40 such that the fixed contact point 42 is inserted into the coupling opening 130.

Accordingly, in the present embodiment, a cross-section of the coupling opening 130 may be configured to correspond to a cross-section of the fixed contact point 42. In the illustrated embodiment, since the coupling opening 130 is disposed to have a round cross-section, a diameter of the coupling opening 130 may be configured to be greater than that of a cross-section of the fixed contact point 42.

The coupling protruding portion 150 is disposed on an inner circumference of the head portion 120 surrounding the coupling opening 130. This will be described in detail later.

The bent portion 140 is a portion of the extension portion 110 in which the first extension portion 111 is continuous with the second extension portion 112. As described above, the first extension portion 111 and the second extension portion 112 are continuous with each other to constitute a certain angle. The bent portion 140 is defined by the structure described above.

The bent portion 140 may be disposed to correspond to a shape of the enclosure 41 of the DC relay 40. In the illustrated embodiment, an outer surface of an upper part of the enclosure 41 to which the terminal structure 30 is coupled extends vertically. In the above embodiment, the bent portion 140 may also have a shape bent at an angle of 90° so that the first extension portion 111 is vertically continuous with the second extension portion 112.

The coupling protruding portion 150 is in contact with the fixed contact point 42 accommodated in the coupling opening 130 to support the fixed contact point 42. The fixed contact point 42 may be drawn out of the coupling opening 130 by the coupling protruding portion 150 only at a preset angle. Accordingly, a state of contact between the body unit 100, the terminal structure 30, and the fixed contact point 42 may be stably maintained.

The coupling protruding portion 150 is disposed on the head unit 120. In detail, the coupling protruding portion 150 is disposed to protrude toward the coupling opening 130 from an inner surface of the head portion 120 surrounding the coupling opening 130.

The coupling protruding portion 150 may be disposed at any position on the inner surface of the head portion 120. In the illustrated embodiment, the coupling protruding portion 150 is located on one side of the inner surface of the head portion 120 directing toward the extension portion 110, that is, on a rear side. In the embodiment described above, the fixed contact point 42 may be coupled to or separated from the coupling protruding portion 150 by a principle of lever.

Slits are disposed through outer sides of the coupling protruding portion 150. In the embodiment of FIG. 12, a pair of slits are disposed to penetrate through the outer sides of the coupling protruding portion 150 in a thickness direction of the head portion 120 to extend in a front-to-rear direction.

That is, the outer sides of the coupling protruding portion 150, i.e., both side surfaces thereof in the illustrated embodiment are disposed to be apart from the inner surface of the head portion 120. Accordingly, the coupling protruding portion 150 may be moved by a certain distance in a direction in which the fixed contact point 42 is inserted into or drawn out of the coupling opening 130, i.e., in a vertical direction in the illustrated embodiment.

The coupling protruding portion 150 may be made of a material having certain elasticity. The coupling protruding portion 150 may be deformed in shape by an applied external force, store restoring force, and when the application of the external force is released, be restored to an original shape by the stored restoring force.

The coupling protruding portion 150 may have any shape capable of supporting the fixed contact point 42 to maintain a state of coupling of the fixed contact point 42 with the body unit 100, further, with the terminal structure 30. In addition, the coupling protruding portion 150 may have any shape such that the fixed contact point 42 may be easily inserted into the coupling opening 130.

In the illustrated embodiment, the coupling protruding portion 150 includes a first protruding portion 151 and a second protruding portion 152.

The first protruding portion 151 is a portion in which the coupling protruding portion 150 is continuous with the head portion 120. The first protruding portion 151 extends toward the coupling opening 130 from the inner surface of the head portion 120, i.e., a surface surrounding the coupling opening 130.

The first protruding portion 151 may extend to constitute a certain angle relative to the inner surface of the head portion 120. In one embodiment, the first protruding portion 151 may extend perpendicularly to the inner surface of the head portion 120. In the above embodiment, the first protruding portion 151 may extend in parallel to the first extension portion 111 of the extension portion 110.

One end portion of the first protruding portion 151 in an extension direction, i.e., a front end portion thereof in the illustrated embodiment is continuous with the second protruding portion 152. The first protruding portion 151 and the second protruding portion unit 152 may be continuous with each other to constitute an angle relative to each other. In one embodiment, the certain angle may be an obtuse angle.

The second protruding portion 152 is a portion in which the coupling protruding portion 150 is in contact with the fixed contact point 42. The second protruding portion 152 supports the fixed contact point 42 to prevent any separation of the body unit 100 from the fixed contact point 42. The fixed contact point 42 may be supported by the second protruding portion 152 to be maintained in a state of being inserted into the coupling opening 130.

The second protruding portion 152 is disposed to extend from the end of the first protruding portion 151 in an extension direction toward the coupling opening 130.

The second protruding portion 152 may extend to constitute a certain angle with the first protruding portion unit 151. In one embodiment, the second protruding portion 152 may extend to constitute an acute angle relative to the first extension portion 151. In this case, the second protruding portion 152 may extend to be inclined in a direction in which the fixed contact point 42 is inserted into the coupling opening 130, i.e., toward an upper side in the illustrated embodiment.

In the above embodiment, the fixed contact point 42 may be inserted into the coupling opening 130 while pressing the coupling protruding portion 150 toward an insertion direction, i.e., toward an upper side in the illustrated embodiment. In this case, the coupling protruding portion 150 is moved by a certain distance and stores restoring force.

When the fixed contact point 42 is fully inserted into the coupling opening 130, the coupling protruding portion 150 returns to an original shape by the stored restoring force. In this case, an end portion of the second protruding portion 152 is in contact with an outer circumference of the fixed contact point 42 to support the fixed contact point 42. Accordingly, unless a separate external force pressing the coupling protruding portion 150 is applied, the fixed contact point 42 is not arbitrarily separated from the coupling opening 130.

With respect to the terminal structure 30 described above according to the present embodiment, a plurality of conducting wire members W configured to be electrically connected to a plurality of sensors, circuits, etc. may be electrically connected and coupled to a single terminal structure 10. The single terminal structure 20 may be coupled and electrically connected to the fixed contact point 42, the busbar 50, etc.

In an embodiment in which a plurality of fixed contact points 42 including the first fixed contact point 42a and the second fixed contact point 42b are equipped, a plurality of terminal structures 30 may also be equipped. In this case, the plurality of terminal structures 30 may be coupled and electrically connected to a plurality of conducting wire members W, respectively.

Accordingly, a wiring structure needed to electrically connect the plurality of conducting wire members W to the DC relay 40, the busbar 50, etc. may become simple and concise.

Further, when direct coupling and electrical connection to the fixed contact point 42 is needed due to a structure of the DC relay 40 or the busbar 50, the terminal structure 30 according to the present embodiment may be adopted.

In this case, the fixed contact point 42 presses the coupling protruding portion 150 and is easily inserted into the coupling opening 130, and after the inserting, an outer circumference of the fixed contact point 42 is supported by the coupling protruding portion 150. Accordingly, direct coupling between the DC relay 40 and the terminal structure 30 may be easily performed, and a state of the coupling may be stably maintained.

Although embodiments of the present disclosure have been described, the aspects of the present disclosure described as above is not limited by the embodiments described herein. It should be apparent to those skilled in the art that various additions, changes, deletions, and modifications of components which are not exemplified herein but are still within the spirit and scope of the present disclosure may be made.

### [Description of Reference numeral]

10: Terminal structure 20: Terminal structure
30: Terminal structure 40: DC relay
41: Enclosure 42: Fixed contact point
42a: First fixed contact point 42b: Second fixed contact point
50: Busbar 51: First busbar
52: Second busbar 60: Fastening member
61: First fastening member 62: Second fastening member
100: Body unit 110: Extension portion
111: First extension portion 112: Second extension portion
120: Head portion 130: Coupling opening
140: Bent portion 150: Coupling protruding portion
151: First protruding portion 152: Second protruding portion
200: Conducting wire member coupling unit 210: First coupling unit
211: First support wing 212: Second support wing
213: First accommodating space 220: Second coupling unit
221: First support arm 222: Second support arm
223: Second accommodating space 300: Current-carrying member
310: Current-carrying body 310 320: Conducting wire member current-carrying unit
321: First current-carrying unit 322: Second current-carrying unit
330: Current-carrying extension portion
1000: DC relay according to the related art
1100: Busbar according to the related art
1200: Conducting wire member
1210: First conducting wire member 1220: Second conducting wire member
1230: Third conductive wire member
1300: Support member according to the related art
1310: First support member 1320: Second support member
1330: Third support member
1400: Fastening member according to the related art
W: conducting wire member W1: First conducting wire member
W2: Second conducting wire member

## Claims

1. A terminal structure comprising:
a body unit coupled to an external device, and electrically connected to the external device and a plurality of conducting wire members, respectively;
a current-carrying member coupled to the body unit, and electrically connected to the body unit and the plurality of conducting wire members, respectively; and
a conducting wire member coupling unit which is coupled to the current-carrying member, and supports the plurality of conducting wire members,
wherein the conducting wire member coupling unit comprises a space for accommodating the plurality of conducting wire members, and a plurality of support wings surrounding the space, and
the plurality of support wings are made of a ductile material and configured to be modified in shape by an external force to surround the plurality of conducting wire members accommodated in the space.

2. The terminal structure of claim 1, wherein the conducting wire member coupling unit comprises:
a first coupling unit comprising the plurality of support wings and a first accommodating space defined by being surrounded by the plurality of support wings, and coupled to one portion of the plurality of conducting wire members in an extension direction; and
a second coupling unit located adjacent to the first coupling unit, comprising a plurality of support arms and a second accommodating space defined by being surrounded by the plurality of support arms, and coupled to another portion of the plurality of conducting wire members in the extension direction.

3. The terminal structure of claim 2, wherein the plurality of support arms are made of a ductile material and configured to be modified in shape by an external force to surround the another portion of the plurality of conducting wire members accommodated in the second accommodating space.

4. The terminal structure of claim 2, wherein the first accommodating space and the second accommodating space are in communication with each other, and the plurality of conducting wire members are respectively accommodated in the first accommodating space and the second accommodating space and extended.

5. The terminal structure of claim 1, wherein the body unit comprises:
an extension portion extending between the current-carrying member and the external device;
a head portion coupled to the external device and continuous with the extension portion; and
a coupling opening which is disposed through an inner side of the head portion and through which a fastening member coupled to the external device passes.

6. The terminal structure of claim 5, wherein the external device is a direct current (DC) relay.

7. The terminal structure of claim 5, wherein the extension portion and the head portion are configured to have a plate shape with a certain thickness.

8. The terminal structure of claim 7, wherein the extension portion comprises:
a first extension portion of which one end portion in an extension direction is continuous with the head portion, and which extends on a same plane as that of the head portion; and
a second extension portion that is continuous with another end of the first extension portion and extends at a certain angle relative to the first extension portion.

9. The terminal structure of claim 7, wherein the extension portion is configured such that one end portion in an extension direction is continuous with the head portion and another end portion in the extension direction is continuous with the current-carrying member, and the extension portion is disposed to extend on a same plane as that of the head portion.

10. The terminal structure of claim 1, wherein the body unit, the conducting wire member coupling unit, and the current-carrying member extend in parallel with each other in one direction.

11. The terminal structure of claim 1, wherein the body unit comprises:
a head portion constituting one end portion of the body unit and coupled to the external device; and
a coupling opening which is disposed to penetrate through an inner side of the head portion and into which a part of the external device is inserted.

12. The terminal structure of claim 11, wherein the body unit comprises a coupling protruding portion located on an inner surface of the head portion surrounding the coupling opening, disposed to extend toward the coupling opening, and configured to support an outer circumference of the part of the external device.

13. The terminal structure of claim 12, wherein the coupling protruding portion comprises:
a first protruding portion disposed to extend from the inner surface of the head portion toward the coupling protruding portion; and
a second protruding portion which is continuous with an end portion of the first protruding portion, disposed to extend at a certain angle relative to the first protruding portion, and configured to be in contact with the outer circumference of the part of the external device.

14. The terminal structure of claim 13, wherein the part of the external device is inserted into the coupling opening along one direction, and
the second protruding portion extends to be inclined toward an inner side of the coupling opening along the one direction.

15. The terminal structure of claim 12, wherein the coupling protruding portion is located to be biased to one side of the inner surface of the head portion, the one side of the inner surface directing toward the current-carrying member.
